# EUROPÄISCHE PATENTSCHRIFT

(11) **EP 2 771 936 B1**
(45) Veröffentlichungstag und Bekanntmachung des Hinweises auf die Patenterteilung: **19.08.2015**
(21) Anmeldenummer: 12733419.1
(22) Anmeldetag: 29.06.2012
(51) Int. Cl.: H01M 10/0525, H02J 7/04, H01M 10/657, H02J 7/00

(54) **LITHIUM-IONEN-BATTERIE**
LITHIUM-ION BATTERY
BATTERIE AU LITHIUM-ION

(30) Priorität: 23.09.2011 DE 102011114304
(43) Veröffentlichungstag der Anmeldung: 03.09.2014
(73) Patentinhaber: Audi AG, 85045 Ingolstadt (DE)
(72) Erfinder: VERGOSSEN, David, 85049 Ingolstadt (DE)
(74) Vertreter: Herbst, Matthias Heinz
(86) Internationale Anmeldenummer: PCT/EP2012/002735
(87) Internationale Veröffentlichungsnummer: WO 2013/041159

(56) Entgegenhaltungen:
- CN-A- 102 074 769
- DE-A1- 4 027 149
- US-A1- 2010 270 976

## Beschreibung

Die Erfindung betrifft eine Lithium-Ionen-Batterie, umfassend eine Mehrzahl von miteinander verschalteten Lithium-Ionen-Zellen und einen Regler zum Regeln eines Ladestroms.

Lithium-Ionen-Batterien sollen zukünftig als Starterbatterie zum Anlassen eines Verbrennungsmotors in Kraftfahrzeugen eingesetzt werden und die derzeit üblicherweise verwendeten 12 Volt-Blei-Säure-Starterbatterien oder AGM-Batterien ersetzen. Beim Kaltstart eines Verbrennungsmotors müssen kurzzeitig sehr große Ströme zur Verfügung gestellt werden. Um diese großen Ströme auch bei niedrigen Temperaturen unter 0°C zur Verfügung stellen zu können, ist bereits vorgeschlagen worden, mehrere Halbleiterbauelemente, insbesondere Transistoren, parallel zu verschalten. Lithium-Ionen-Zellen, insbesondere sogenannte Hochenergiezellen, die sich durch eine hohe Energiedichte auszeichnen, weisen jedoch die Eigenschaft auf, dass sie bei Temperaturen unter 0°C nicht geladen werden dürfen. Andererseits dürfen sogenannte Hochleistungszellen mit kleinen Strömen auch bei diesen tiefen Temperaturen geladen werden. Hochleistungszellen sind Lithium-Ionen-Zellen, die auf eine hohe Leistung ausgelegt sind. Die notwendige Begrenzung des Ladestroms soll verhindern, dass chemische Reaktionen, insbesondere das sogenannte Lithium-Plating, verhindert werden, die ansonsten zu einem Ausfall oder einer Beschädigung der Zelle führen könnten.

Batteriezellen weisen allgemein die Eigenschaft auf, bei niedrigen Temperaturen einen höheren Innenwiderstand und eine geringere entnehmbare Kapazität aufzuweisen als bei höheren Temperaturen. Die Leistungsfähigkeit einer Batterie oder einer Batteriezelle steigt somit mit zunehmender Temperatu r.

Aus der DE 40 27 149 A1 ist eine Batterieheizung bekannt, die für 12 Volt-Blei-Akkumulatoren geeignet ist. Die Batterieheizung weist Leistungstransistoren auf, die auf einer als Kühlblech benutzten Aluminiumplatte montiert sind. Die Batterieheizung ist in einem Gehäuse untergebracht, das an der Außenseite einer zu beheizenden Batterie angebracht wird. Auf diese Weise kann ein Akkumulator mittels der in ihm gespeicherten Energie beheizt werden, bei längeren Standzeiten ist eine Beheizung jedoch nicht möglich, da der Batterie permanent Energie entzogen wird.

Aus der DE 100 14 848 A1 ist eine Batterieheizvorrichtung bekannt, bei der die Abwärme eines Aggregats eines Kraftfahrzeugs zur Beheizung der Temperatur benutzt wird. Das Aggregat kann beispielsweise ein Steuergerät für eine Fensterscheibenheizung sein, dessen Abwärme der Batterie zugeführt wird. Aus der US2010/0270976 A1 ist zudem eine Vorrichtung zur Nutzung der parasitären Wärme einer Halbleiteranordnung bekannt, bei der die Abwärme über ein Wärmeträgermedium an die zu erwärmende Batterie übertragen wird.

Der Erfindung liegt die Aufgabe zugrunde, eine Lithium-Ionen-Batterie zu schaffen, die weniger Energie zur Beheizung der Lithium-Ionen-Zellen benötigt.

Zur Lösung dieser Aufgabe ist bei einer Lithium-Ionen-Batterie der eingangs genannten Art erfindungsgemäß vorgesehen, dass der Regler wenigstens eine Halbleiteranordnung umfasst, die derart angeordnet ist, dass deren parasitäre Wärme den Lithium-Ionen-Zellen zur Erwärmung zuführbar ist, wobei die zur Regelung des Ladestroms vorgesehene Halbleiteranordnung auf einem Träger befestigt ist, der zwischen Lithium-Ionen-Zellen angeordnet ist

Die Erfindung beruht auf der Erkenntnis, dass die Energiebilanz einer Lithium-lonen-Batterie verbessert werden kann, indem die im Rahmen der Regelung des Ladestroms umgesetzte Energie, die normalerweise als parasitäre vom Regler abgegebene Wärme verloren geht, zumindest teilweise zur Erwärmung der Lithium-Ionen-Zellen verwendet wird. Dementsprechend verringert sich der vom Generator bei laufender Brennkraftmaschine zu erzeugende Strom, wodurch der Energieverbrauch sinkt.

Bei der erfindungsgemäßen Lithium-Ionen-Batterie kann es vorgesehen sein, dass die Halbleiteranordnung wenigstens einen Transistor umfasst, vorzugsweise eine Mehrzahl derartiger Transistoren, insbesondere um den Ladestrom linear zu regeln. Es ist zweckmäßig, dass mehrere parallel geschaltete Transistoren verwendet werden, um eine Überlastung und eine eventuelle Zerstörung eines Transistors zu verhindern. Zudem wird die Wärme durch mehrere, verteilte Transistoren besser und gleichmäßiger verteilt. Wenn ein Transistor linear geregelt wird, verhält er sich wie ein veränderlicher ohmscher Widerstand und erzeugt somit eine parasitäre joulesche Wärme, die abgeführt werden muss, um eine Zerstörung des Transistors zu vermeiden. Üblicherweise wird ein Kühlkörper benutzt, um die parasitäre Wärme an die Umwelt abzugeben. Bei der erfindungsgemäßen Lithium-Ionen-Batterie wird diese parasitäre Wärme hingegen zur Erwärmung der Lithium-Ionen-Zellen benutzt.

Im Rahmen einer Weiterbildung der Erfindung kann es vorgesehen sein, dass die Halbleiteranordnung der erfindungsgemäßen Lithium-Ionen-Batterie wenigstens einen weiteren Transistor umfasst, vorzugsweise eine Mehrzahl derartiger weiterer Transistoren, der oder die als Schalter betreibbar ist bzw. sind, um die Lithium-Ionen-Batterie von einer Stromquelle, insbesondere dem Bordnetz eines Fahrzeugs, zu trennen. Dieser Schalter dient als Schutzmechanismus gegen Überladen, Überstrom, Übertemperatur und Tiefentladung sowie weiterer Fehlerzustände. Falls ein Batteriemanagementsystem einen Störfall detektiert hat, kann die Lithium-Ionen-Batterie vollständig vom Bordnetz getrennt werden.

Eine besonders bevorzugte Weiterbildung der Erfindung sieht vor, dass die Lithium-Ionen-Zellen vorzugsweise reihenweise oder spaltenweise angeordnet sind, so dass der Träger zumindest teilweise zwischen den Spalten und/oder Reihen angeordnet ist. Generell sind die Lithium-Ionen-Zellen in irgendeiner Weise geometrisch zweidimensional oder dreidimensional angeordnet, beispielsweise als Zellenfeld oder als dreidimensionale Zellenmatrix. Der Träger wird jeweils zwischen benachbarten Lithium-Ionen-Zellen positioniert, um die parasitäre Wärme möglichst effizient und gleichmäßig abzugeben.

Eine noch höhere Effizienz und eine besonders gleichmäßige Verteilung der parasitären Wärme kann erzielt werden, wenn die Halbleiteranordnung, insbesondere die Transistoren, auf beiden Seiten des Trägers angeordnet ist bzw. sind.

Eine besonders gute Anpassung an die Geometrie wird ermöglicht, wenn der Träger bei der erfindungsgemäßen Lithium-Ionen-Batterie U-förmig oder mäanderförmig geformt ist. In diesem Fall kann der Träger zwischen den Lithium-lonen-Zellen positioniert werden, so dass diese gleichmäßig erwärmt werden.

Es ist auch denkbar, dass bei der erfindungsgemäßen Lithium-Ionen-Batterie die Halbleiteranordnung, insbesondere die Transistoren, derart beabstandet auf dem Träger angeordnet sind, dass sie jeweils in einem Zwickel zwischen Lithium-Ionen-Zellen angeordnet sind. Dadurch ergibt sich der zusätzliche Vorteil einer optimalen Bauraumausnutzung, so dass die erfindungsgemäße Lithium-Ionen-Batterie keinen größeren Bauraum als eine herkömmliche Lithium-lonen-Batterie erfordert.

Um die Wärmeleitung bei der erfindungsgemäßen Lithium-Ionen-Batterie zu verbessern, kann der Träger als Blech ausgebildet sein, insbesondere als Kupferblech oder als Aluminiumblech. Darüber hinaus kommen weitere Metalle als Material für das Blech in Frage, die eine überdurchschnittlich gute Wärmeleitfähigkeit aufweisen.

Eine noch bessere Wärmeleitung und -verteilung kann erzielt werden, wenn ein Freiraum zwischen dem Träger und den Lithium-Ionen-Zellen mit einem Material mit hoher Wärmeleitfähigkeit gefüllt ist. Insbesondere kann Silikon-kautschuk zu diesem Zweck eingesetzt werden. Es kommen jedoch auch andere Kunststoffe in Frage, die eine hohe Wärmeleitfähigkeit aufweisen.

Optional können die als Schalter betreibbaren Transistoren der erfindungsgemäßen Lithium-Ionen-Batterie auf einem separaten, vorzugsweise als Blech ausgebildeten Träger angeordnet sein. Als weitere Option kann ein drittes Blech vorgesehen sein, an dem Anschlüsse der als Schalter betreibbaren Transistoren angeschlossen sind.

Um die erfindungsgemäße Lithium-Ionen-Batterie für weitere Betriebszustände zu nutzen, kann sie einen oder mehrere insbesondere elektronische Schalter umfassen, um die Lithium-Ionen-Zellen mittels der Halbleiteranordnung, insbesondere mittels der als Schalter betreibbaren Transistoren, zu beheizen. In einem derartigen Betriebszustand findet keine Stromregelung statt, dennoch kann die parasitäre Wärme der als Schalter betreibbaren Transistoren zur Beheizung der Lithium-Ionen-Zellen benutzt werden.

Daneben betrifft die Erfindung ein Fahrzeug, insbesondere ein Kraftfahrzeug.

Das erfindungsgemäße Fahrzeug zeichnet sich dadurch aus, dass es eine Lithium-Ionen-Batterie der beschriebenen Art aufweist.

Weitere Vorteile und Einzelheiten der Erfindung werden nachfolgend anhand von Ausführungsbeispielen unter Bezugnahme auf die Zeichnungen erläutert. Die Zeichnungen sind schematische Darstellung und zeigen:
- Fig. 1: ein Schaltbild eines ersten Ausführungsbeispiels einer erfindungsgemäßen Lithium-Ionen-Batterie;
- Fig. 2: eine Draufsicht der Lithium-Ionen-Batterie von Fig. 1;
- Fig. 3: eine schematische geschnittene Ansicht der Lithium-Ionen-Batterie von Fig. 1;
- Fig. 4: ein Schaltbild eines zweiten Ausführungsbeispiels einer erfindungsgemäßen Lithium-Ionen-Batterie und
- Fig. 5: eine schematische Schnittdarstellung der Lithium-Ionen-Batterie von Fig. 4.

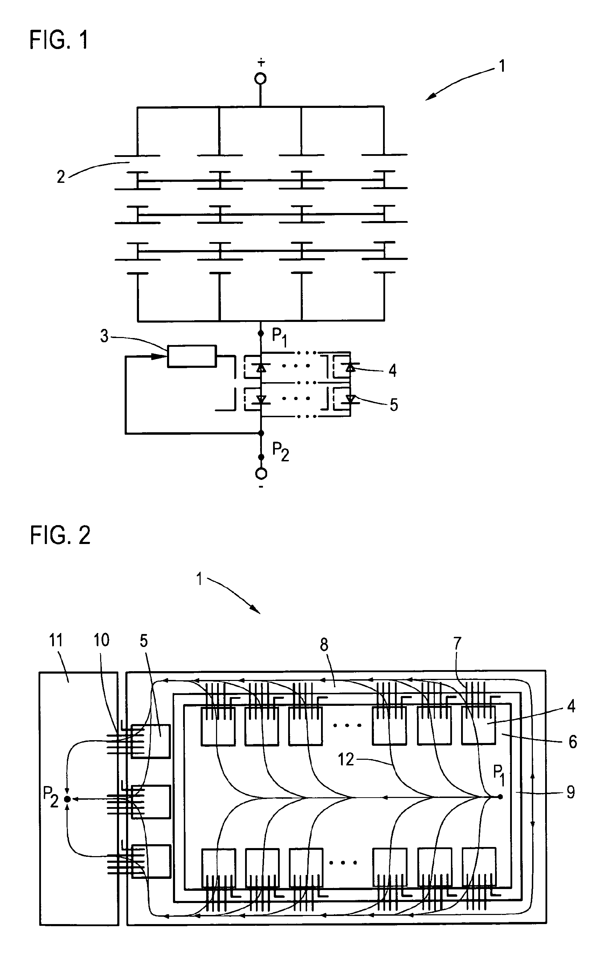

Fig. 1 zeigt ein schematisches Schaltbild einer Lithium-Ionen-Batterie 1 eines Kraftfahrzeugs, umfassend eine Mehrzahl von miteinander verschalteten Lithium-lonen-Zellen 2 und einen Regler 3 zum Regeln eines Ladestroms. Die Lithium-Ionen-Zellen 2 sind in Spalten und Reihen angeordnet und angeschlossen, so dass die Lithium-Ionen-Batterie sowohl eine bestimmte Spannung als auch einen bestimmten Strom liefern kann. Der Regler 3 misst den Strom, der in die Lithium-Ionen-Batterie 1 hineinfließt, anhand dieses gemessenen Stroms wird die Gate-Source-Spannung durch eine Halbleiteranordnung in Form von Transistoren 4 geregelt. In dem dargestellten Ausführungsbeispiel ist eine Gruppe von parallel geschalteten Transistoren 4 vorhanden, jeder Transistor 4 wird linear geregelt. Zusätzlich ist eine Gruppe von Transistoren 5 vorgesehen, die zur Trennung der Lithium-Ionen-Batterie 1 vom Bordnetz eines Fahrzeugs in einem Notfall dient. In Kombination bilden die zum Regeln des Ladestroms verwendeten Transistoren 4 und die als Schalter betreibbaren Transistoren 5 einen Aktuator, der auch als solid state relay (SSR) bezeichnet wird und das Verhalten eines herkömmlichen elektromechanischen Relais nachbildet, durch das die Lithium-Ionen-Batterie 1 vom Fahrzeugbordnetz getrennt werden kann.

Die als Schalter betreibbaren Transistoren 5 haben keinen Einfluss auf den Ladestrom, da deren parasitäre Diode in Laderichtung leitend ist. In Laderichtung sperren jedoch die Dioden der zur Regelung des Ladestroms vorgesehenen Transistoren 4, somit kann der Ladestrom nur durch die Transistoren 4 begrenzt werden. Um die Lithium-Ionen-Batterie vollständig, d. h. sowohl beim Laden als auch beim Entladen, vom Bordnetz zu trennen, werden beide Gruppen der Transistoren 4, 5 benötigt.

Die in Fig. 1 gezeigte Lithium-Ionen-Batterie kann in drei Betriebszuständen betrieben werden.

In einem ersten Betriebszustand sind die Transistoren 4, 5 voll durchgeschaltet. Dieser Zustand entspricht einem durchgeschalteten elektromechanischen Relais. Dieser Betriebszustand ist der Normalfall bei Außentemperaturen über 0°C. In diesem Fall ist keine Begrenzung des Ladestroms und keine Trennung der Lithium-Ionen-Batterie vom Bordnetz erforderlich.

In einem zweiten Betriebszustand werden die für den Ladevorgang vorgesehenen Transistoren 4 derart geregelt, dass der Strom, der in die Lithium-Ionen-Batterie 1 hineinfließt, begrenzt wird. Auf diese Weise wird eine Begrenzung des Ladestroms realisiert. Die Gruppe der als Schalter betreibbaren Transistoren 5 ist vollständig durchgeschaltet. Dieser Betriebszustand liegt typischerweise bei Temperaturen < 0°C vor, wenn der Ladestrom begrenzt werden muss.

In einem dritten Betriebszustand sind beide Gruppen der Transistoren 4, 5 offen. In einem mechanischen Ersatzmodell entspricht dieser Betriebszustand einem offenen Relais. Dieser Betriebszustand kann vorliegen, wenn ein Batteriemanagementsystem einen Störfall detektiert hat, so dass die Lithium-Ionen-Batterie 1 vollständig vom Bordnetz getrennt worden ist. Wenn selbstsperrende Halbleiterschalter verwendet werden, ergibt sich der Vorteil, dass der Halbleiterschalter bei Stromausfall oder wenn er kein Eingangssignal bekommt, sperrt und die Batterie automatisch vom Bordnetz trennt.

Die Gruppe der Transistoren 4, die für die Regelung des Ladestroms vorgesehen sind, wird linear geregelt. Dementsprechend verhält sich jeder Transistor 4 wie ein veränderlicher ohmscher Widerstand und erzeugt somit eine parasitäre joulesche Wärme, die abgeführt werden muss, um eine Zerstörung des Transistors durch Überhitzung zu vermeiden.

Fig. 2 zeigt eine Draufsicht eines Teils der Lithium-Ionen-Batterie 1. Die Mehrzahl der Transistoren 4 ist auf einem Träger 6 angeordnet. In dem dargestellten Ausführungsbeispiel besteht der Träger 6 aus einem Kupferblech, die Transistoren 4 sind materialschlüssig durch Weichlöten aufgebracht. Dadurch ergibt sich neben einer sehr guten elektrischen Anbindung auch eine sehr gute thermische Anbindung der Transistoren 4. Stromführende Anschlüsse 7 der Transistoren 4 sind mit einem den Träger 6 umgebenden Träger 8 verbunden. Der Träger 8 umgibt den Träger 6 wie ein Rahmen, die abgewinkelten Anschlüsse 7 der Transistoren 4 dienen deren Ansteuerung.

Ein Luftspalt 9 dient zur elektrischen Isolation der beiden Träger 6, 8 voneinander.

Auf dem Träger 8 sind zusätzlich die Transistoren 5 angeordnet, deren stromführende Anschlüsse 10 mit einem weiteren als Blech ausgebildeten Träger 11 verbunden sind.

In den Fig. 1 und 2 sind zusätzlich Punkte P1 und P2 eingezeichnet, die sich grundsätzlich an beliebiger Stelle auf dem Träger 6 bzw. auf dem Träger 11 befinden können. Anhand der Punkte P1 und P2 werden die Stromrichtungen verdeutlicht.

Die in Fig. 2 gezeigte Anordnung der Transistoren 4, 5 dient dazu, die parasitäre joulesche Wärme bestmöglichst auf die Lithium-Ionen-Zellen zu verteilen. Insgesamt umfasst die Lithium-Ionen-Batterie 1 drei Träger 6, 8, 11, die aus Kupferblech bestehen, das eine hervorragende Wärmeleitfähigkeit als auch eine hervorragende elektrische Leitfähigkeit besitzt. Bei anderen Ausführungen können die Träger auch aus Aluminium oder einem anderen Metall bestehen. Aus Gewichts- und Kostengründen werden Träger aus Aluminium bevorzugt.

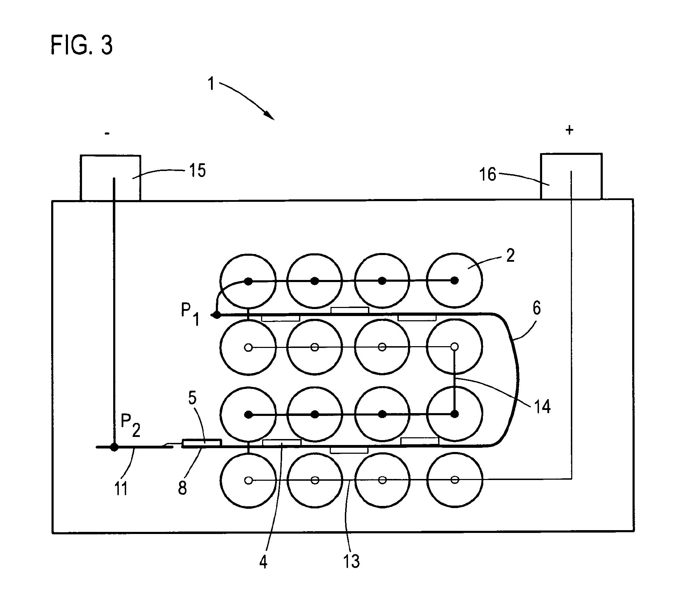

Fig. 3 ist eine schematische Seitenansicht der Lithium-Ionen-Batterie 1 und zeigt deren räumlichen Aufbau. Wenn die Lithium-Ionen-Batterie 1 geladen wird, fließt der vom Regler 3 geregelte Strom entlang der in Fig. 2 gezeigten Linien 12 von P1 über die Transistoren 4 und die Transistoren 5 zum Punkt P2 auf dem Träger 11. Dadurch erwärmt sich primär der Träger 6 durch die parasitäre Wärme der Transistoren 4. Die verteilte Anordnung der Transistoren 4 bewirkt, dass sich der Träger 6 zumindest näherungsweise homogen erwärmt d. h. er weist eine gleichmäßige Temperaturverteilung auf.

In Fig. 3 erkennt man, dass der Träger 6 U-förmig gebogen bzw. abgewinkelt ist und innerhalb des Gehäuses zwischen den in Reihen angeordneten Lithium-Ionen-Zellen 2 positioniert ist. Der Träger 6 wird somit zunächst mit den Transistoren 4 bestückt, anschließend werden beide Träger 6, 8 gebogen und zwischen die Lithium-Ionen-Zellen 2 geschoben. In Fig. 3 erkennt man, dass die Lithium-Ionen-Zellen 2 in vier Reihen angeordnet sind. Alle Lithium-Ionen-Zellen 2 einer Reihe sind parallel geschaltet, dazu sind Zellverbinder 13 vorgesehen. Mittels weiterer Zellverbinder 14, die senkrecht dazu angeordnet sind, werden die Reihen der parallel geschalteten Lithium-Ionen-Zellen 2 in Serie verschaltet.

In Fig. 3 erkennt man weiter, dass P1 an dem Minuspol eines Packs der Lithium-lonen-Zellen 2 angeschlossen ist, P2 ist am Minuspol 15 (Minusklemme der Batterie 1) angeschlossen. Der Pluspol eines Packs der Lithium-Ionen-Zellen 2 ist direkt mit dem Pluspol 16 der Lithium-Ionen-Batterie 1 verbunden.

Die Träger 6, 8 mit den darauf angeordneten Transistoren 4, 5 sowie der Träger 11 dienen somit einerseits als solid state relay (SSR) und andererseits als Stromregler mit direkter Nutzung der parasitären Wärme, die bei der Regelung des Stroms entsteht. Der U-förmig gebogene Träger 6 ist so zwischen den Lithium-Ionen-Zellen 2 angeordnet, dass diese gleichmäßig erwärmt werden. Man erkennt auch, dass die Transistoren 4 in Zwickel zwischen den einzelnen Lithium-Ionen-Zellen 2 auf dem Träger 6 montiert sind. Die Freiräume zwischen Lithium-Ionen-Zellen und den Transistoren 4 bzw. dem Träger 6 sind mit Silikonkautschuk (nicht gezeigt) ausgefüllt, das sich durch eine besonders gute Wärmeleitung auszeichnet.

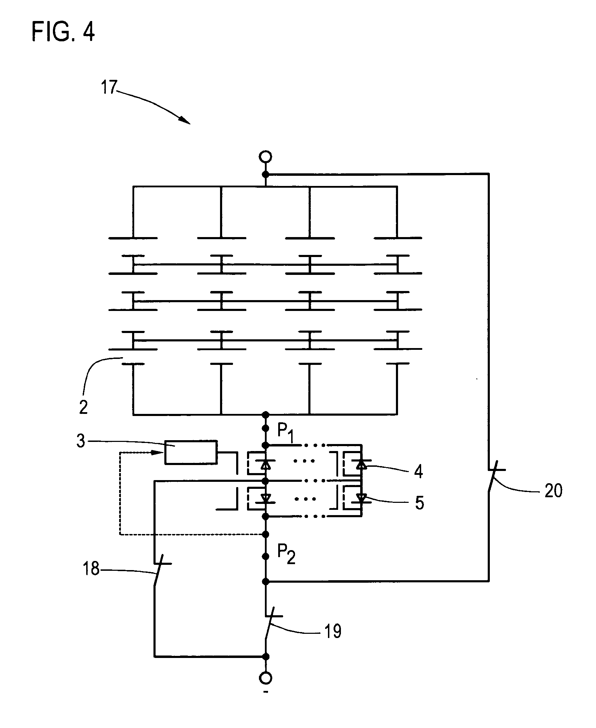

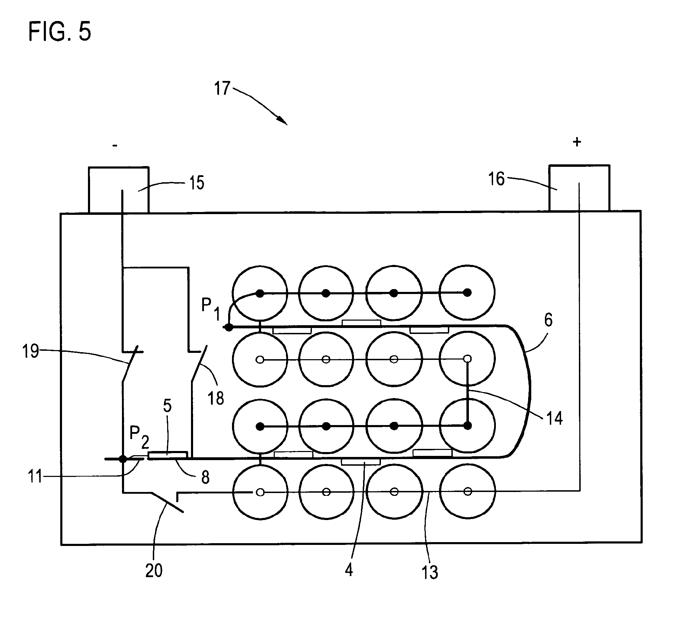

Die Fig. 4 und 5 zeigen ein zweites Ausführungsbeispiel einer Lithium-Ionen-Batterie 17, das ähnlich wie das erste Ausführungsbeispiel aufgebaut ist.

Übereinstimmende Bestandteile werden daher an dieser Stelle nicht nochmals im Detail erläutert.

Fig. 4 ist ein schematisches Schaltdiagramm der Lithium-Ionen-Batterie 17, Fig. 5 ist eine schematische geschnittene Ansicht der Lithium-Ionen-Batterie 17.

Zusätzlich zu der in dem ersten Ausführungsbeispiel beschriebenen Lithium-Ionen-Batterie 1 umfasst die Lithium-Ionen-Batterie 17 Schalter 18, 19, 20 die in Fig. 4 mit einem normalen Schaltersymbol dargestellt sind, die Schaltfunktion wird jedoch durch Halbleiterbauelemente realisiert. Bei anderen Ausführungsbeispielen können die Schalter als mechanische Schalter ausgebildet sein.

Wenn die Lithium-Ionen-Batterie 17 in einem Normalbetrieb benutzt wird, wird parasitäre Wärme der Transistoren 4 während der Regelung des Ladestroms zum Heizen der Lithium-Ionen-Zellen 2 genutzt. In diesem Zustand ist der Schalter 18 offen, der Schalter 19 ist geschlossen und der Schalter 20 ist geöffnet.

Alternativ ist ein zweiter Betriebsmodus möglich, in dem keine Regelung des Ladestroms vorgenommen wird, dennoch können die auf den Trägern 6, 8 angeordneten Transistoren 4, 5 zur Beheizung der Lithium-Ionen-Zellen 2 genutzt werden. In diesem Betriebsmodus ist der Schalter 18 geschlossen, der Schalter 19 geöffnet und der Schalter 20 geschlossen. Dabei liegen die Transistoren 5 elektrisch parallel zu dem Zellenpack der Lithium-Ionen-Zellen 2 und können zu dessen Beheizung linear geregelt werden. Ladestrom und Entladestrom fließen dabei über den Schalter 18 und die Transistoren 4. Der Schalter 18 ist dazu so ausgebildet, dass die SSR-Eigenschaft erhalten bleibt. Daher wird für den Schalter 18 ein Transistor verwendet, der eine parasitäre Diode aufweist, deren Kathode in Richtung des Minuspols 15 der Lithium-Ionen-Batterie 17 weist, dasselbe gilt für den Schalter 20. Der Schalter 18 sollte ein solid state relay sein. Fig. 5 zeigt den entsprechenden mechanischen Aufbau der Lithium-Ionen-Batterie 17.

## Patentansprüche

1. Lithium-Ionen-Batterie (1), umfassend eine Mehrzahl von miteinander verschalteten Lithium-Ionen-Zellen (2) und einen Regler (3) zum Regeln eines Ladestroms, der wenigstens eine Halbleiteranordnung umfasst, die derart angeordnet ist, dass deren parasitäre Wärme den Lithium-Ionen-Zellen (2) zur Erwärmung zuführbar ist,
**dadurch gekennzeichnet,**
**dass** die zur Regelung des Ladestroms vorgesehene Halbleiteranordnung auf einem Träger (6, 8) befestigt ist, der zwischen Lithium-Ionen-Zellen (2) angeordnet ist.

2. Lithium-Ionen-Batterie nach Anspruch 1,
**dadurch gekennzeichnet,**
**dass** die Halbleiteranordnung einen Transistor (4) oder eine Mehrzahl derartiger Transistoren (4) umfasst.

3. Lithium-Ionen-Batterie nach Anspruch 2,
**dadurch gekennzeichnet,**
**dass** die Halbleiteranordnung einen weiteren Transistor (5) oder eine Mehrzahl derartiger weiterer Transistoren (5) umfasst, der oder die als Schalter betreibbar ist bzw. sind, um die Lithium-Ionen-Batterie (1, 17) von einer Stromquelle zu trennen.

4. Lithium-Ionen-Batterie nach einem der vorangehenden Ansprüche,
**dadurch gekennzeichnet,**
**dass** die Lithium-Ionen-Zellen (2) reihenweise oder spaltenweise angeordnet sind und dass der Träger (6, 8) zumindest teilweise zwischen den Spalten und/oder Reihen angeordnet ist.

5. Lithium-Ionen-Batterie nach einem der vorangehenden Ansprüche,
**dadurch gekennzeichnet,**
**dass** die Halbleiteranordnung auf beiden Seiten des Trägers (6, 8) angeordnet ist.

6. Lithium-Ionen-Batterie nach einem der vorangehenden Ansprüche,
**dadurch gekennzeichnet,**
**dass** der Träger (6, 8) U-förmig oder mäanderförmig geformt ist.

7. Lithium-Ionen-Batterie nach einem der vorangehenden Ansprüche,
**dadurch gekennzeichnet,**
**dass** die Halbleiteranordnung derart beabstandet auf dem Träger (6, 8) angeordnet ist, dass sie jeweils in einem Zwickel zwischen Lithium-Ionen-Zellen (2) angeordnet ist.

8. Lithium-Ionen-Batterie nach einem der vorangehenden Ansprüche,
**dadurch gekennzeichnet,**
**dass** der Träger (6, 8) als Blech ausgebildet ist.

9. Lithium-Ionen-Batterie nach Anspruch 8,
**dadurch gekennzeichnet,**
**dass** der Träger als Kupferblech oder Aluminiumblech ausgebildet ist.

10. Lithium-Ionen-Batterie nach einem der vorangehenden Ansprüche,
**dadurch gekennzeichnet,**
**dass** ein Freiraum zwischen dem Träger (6, 8) und den Lithium-Ionen-Zellen (2) mit einem Material mit hoher Wärmeleitfähigkeit gefüllt ist.

11. Lithium-Ionen-Batterie nach Anspruch 10,
**dadurch gekennzeichnet,**
**dass** das Material Silikonkautschuk ist.

12. Lithium-Ionen-Batterie nach einem der Ansprüche 3 bis 11,
**dadurch gekennzeichnet,**
**dass** die als Schalter betreibbaren Transistoren (5) auf einem separaten Träger (8) angeordnet sind.

13. Lithium-Ionen-Batterie nach einem der Ansprüche 3 bis 12,
**dadurch gekennzeichnet,**
**dass** sie einen oder mehrere insbesondere elektronische Schalter (18, 19, 20) umfasst, um die Lithium-Ionen-Zellen (2) mittels der Halbleiteranordnung zu beheizen.

14. Fahrzeug, insbesondere Kraftfahrzeug,
**dadurch gekennzeichnet,**
**dass** es eine Lithium-Ionen-Batterie (1, 17) nach einem der Patentansprüche 1 bis 13 aufweist.

## Claims

1. Lithium-ion battery (1), comprising a plurality of interconnected lithium-ion cells (2) and a controller (3) for controlling a charging current, which comprises at least one semiconductor assembly which is arranged such that the parasitic heat thereof can be supplied to the lithium-ion cells (2) for the purposes of heating,
**characterised in that**
the semiconductor assembly provided for controlling the charging current is attached to a substrate (6, 8), which is arranged between lithium-ion cells (2).

2. Lithium-ion battery according to claim 1,
**characterised in that**
the semiconductor assembly comprises a transistor (4) or a plurality of transistors (4) of this type.

3. Lithium-ion battery according to claim 2,
**characterised in that**
the semiconductor assembly comprises an additional transistor (5) or a plurality of additional transistors (5) of this type, which can be operated as switches in order to disconnect the lithium-ion battery (1, 17) from a current source.

4. Lithium-ion battery according to any of the preceding claims,
**characterised in that**
the lithium-ion cells (2) are arranged in rows or columns, and **in that** the substrate (6, 8) is arranged between the columns and/or rows at least in part.

5. Lithium-ion battery according to any of the preceding claims,
**characterised in that**
the semiconductor assembly is arranged on either side of the substrate (6,8).

6. Lithium-ion battery according to any of the preceding claims,
**characterised in that**
the substrate (6, 8) is U-shaped or meandering.

7. Lithium-ion battery according to any of the preceding claims,
**characterised in that**
the semiconductor assembly is arranged on the substrate (6, 8) with spacing, such that in each case it is arranged in a gap between lithium-ion cells (2).

8. Lithium-ion battery according to any of the preceding claims,
**characterised in that**
the substrate (6, 8) is formed as a metal sheet.

9. Lithium-ion battery according to claim 8,
**characterised in that**
the substrate is formed as a copper sheet or aluminium sheet.

10. Lithium-ion battery according to any of the preceding claims,
**characterised in that**
a clearance between the substrate (6, 8) and the lithium-ion cells (2) is filled with a material having high thermal conductivity.

11. Lithium-ion battery according to claim 10,
**characterised in that**
the material is silicone rubber.

12. Lithium-ion battery according to any of claims 3 to 11,
**characterised in that**
the transistors (5) which can be operated as switches are arranged on a separate substrate (8).

13. Lithium-ion battery according to any of claims 3 to 12,
**characterised in that**
said battery comprises one or more, in particular electronic, switches (18, 19, 20) in order to heat the lithium-ion cells (2) by means of the semiconductor assembly.

14. Vehicle, in particular a motor vehicle,
**characterised in that**
said vehicle comprises a lithium-ion battery (1, 17) according to any of claims 1 to 13.

## Revendications

1. Batterie lithium-ion (1) comprenant une pluralité d'éléments lithium-ion (2) connectés les uns aux autres et un régulateur (3) pour réguler un courant de charge, qui comprend au moins un aménagement à semi-conducteurs, qui est disposé de sorte que sa chaleur parasite soit acheminée aux éléments lithium-ion (2) pour augmenter la température,
**caractérisée en ce que** :
l'aménagement à semi-conducteurs prévu pour la régulation du courant de charge est fixé sur un support (6, 8) qui est agencé entre les éléments lithium-ion (2).

2. Batterie lithium-ion selon la revendication 1, **caractérisée en ce que** :
l'aménagement à semi-conducteurs comprend un transistor (4) ou une pluralité de tels transistors (4).

3. Batterie lithium-ion selon la revendication 2, **caractérisée en ce que** :
l'aménagement à semi-conducteurs comprend un autre transistor (5) ou une pluralité de tels autres transistors (5), qui peut ou peuvent être exploités comme commutateur(s) pour séparer la batterie lithium-ion (1, 17) d'une source de courant.

4. Batterie lithium-ion selon l'une quelconque des revendications précédentes,
**caractérisée en ce que** :
les éléments lithium-ion (2) sont aménagés en rangées ou en colonnes et le support (6, 8) est aménagé au moins en partie entre les colonnes et/ou les rangées.

5. Batterie lithium-ion selon l'une quelconque des revendications précédentes,
**caractérisée en ce que** :
l'aménagement à semi-conducteurs est situé sur les deux faces du support (6, 8).

6. Batterie lithium-ion selon l'une quelconque des revendications précédentes,
**caractérisée en ce que** :
le support (6, 8) se présente en forme de U ou sous forme sinueuse.

7. Batterie lithium-ion selon l'une quelconque des revendications précédentes,
**caractérisée en ce que** :
l'aménagement à semi-conducteurs est disposé espacé sur le support (6, 8) telle qu'il soit respectivement agencé dans un coin entre les éléments lithium-ion (2).

8. Batterie lithium-ion selon l'une quelconque des revendications précédentes,
**caractérisée en ce que** :
le support (6, 8) se présente sous la forme d'une tôle.

9. Batterie lithium-ion selon la revendication 8, **caractérisée en ce que** :
le support se présente sous la forme d'une tôle de cuivre ou d'une tôle d'aluminium.

10. Batterie lithium-ion selon l'une quelconque des revendications précédentes,
**caractérisée en ce que** :
un espace libre entre le support (6, 8) et les éléments lithium-ion (2) est rempli d'un matériau doté d'une conductibilité thermique élevée.

11. Batterie lithium-ion selon la revendication 10, **caractérisée en ce que** :
le matériau est du caoutchouc de silicone.

12. Batterie lithium-ion selon l'une quelconque des revendications 3 à 11,
**caractérisée en ce que** :
les transistors (5) exploitables comme commutateurs sont aménagés sur un support séparé (8).

13. Batterie lithium-ion selon l'une quelconque des revendications 3 à 12,
**caractérisée en ce que** :
elle comprend un ou plusieurs commutateurs en particulier électroniques (18, 19, 20) pour chauffer les éléments lithium-ion (2) au moyen de l'aménagement à semi-conducteurs.

14. Véhicule, en particulier véhicule automobile,
**caractérisé en ce que** :
il présente une batterie lithium-ion (1, 17) selon l'une quelconque des revendications 1 à 13.
